# EUROPÄISCHE PATENTSCHRIFT

(11) **EP 1 336 244 B1**
(45) Veröffentlichungstag und Bekanntmachung des Hinweises auf die Patenterteilung: **11.04.2012**
(21) Anmeldenummer: 01997888.1
(22) Anmeldetag: 19.11.2001
(51) Int. Cl.: H02P 6/10

(54) **AKTIVE GERÄUSCHKOMPENSATION**
ACTIVE NOISE COMPENSATION
COMPENSATION ACTIVE DE BRUIT

(30) Priorität: 23.11.2000 DE 10058293
(43) Veröffentlichungstag der Anmeldung: 20.08.2003
(73) Patentinhaber: SIEMENS AKTIENGESELLSCHAFT, 80333 München (DE)
(72) Erfinder: TÖLLE, Hans-Jürgen, 90419 Nürnberg (DE); VOGEL, Reinhard, 91074 Herzogenaurach (DE); MARX, Walter, 90408 Nürnberg (DE)
(86) Internationale Anmeldenummer: PCT/DE2001/004344
(87) Internationale Veröffentlichungsnummer: WO 2002/043237

(56) Entgegenhaltungen:
- EP-A- 0 800 263
- WO-A-99/36312
- US-A- 5 117 141
- US-A- 5 223 775
- US-A- 5 323 093
- US-A- 5 821 725

## Beschreibung

Die Erfindung betrifft ein Verfahren zur Regelung eines mehrphasigen elektrischen Schiffsantriebsmotors, der über einen Stromrichter mit elektrischer Energie versorgt wird, wobei der Schiffsantriebsmotor vorzugsweise als permanenterregter Motor mit mindestens drei Wicklungen ausgebildet ist.

Bei mehrphasigen elektrischen Schiffsantriebsmotoren, die stromrichtergespeist sind, ergibt sich ein niederfrequenter Körperschall, der im wesentlichen auf Pendelmomenten im Motor beruht. Eine derartige Körperschallemission ist besonders für Unterwasserschiffe (U-Boote) gefährlich, da niederfrequente Geräusche im Wasser besonders weit tragen.

Aus der US 5 323 093 A das den Oberbegriff des Anspruchs 1 bildet, ist ein Verfahren zur Regelung eines mehrphasigen Motors bekannt, der über einen Stromrichter mit elektrischer Energie versorgt wird, wobei der Motor mit mindestens drei Wicklungen ausgebildet ist, und wobei die in den Wicklungen fließenden Phasenströme über den Stromrichter zur Erzeugung eines konstanten Drehmoments auf den Summenstrom Null geregelt werden.

Es ist Aufgabe der Erfindung, die Körperschallemissionen, insbesondere von U-Bootmotoren, aber auch von den Motoren in elektrischen Ruderpropellern, sei es für Marineschiffe oder für Kreuzfahrtschiffe etc. soweit wie möglich herabzudrücken.

Die Aufgabe wird durch Anspruch 1 gelöst. Die in den Wicklungen des elektrischen Antriebsmotors fließenden Phasenströme werden über den Stromrichter zur Minimierung der von dem elektrischen Schiffsantriebsmotor ausgehenden Körperschallgeräusche geregelt. Eine derartige Regelung erfolgt als Regelung der verbleibenden Gleichstromanteile zum Summenstrom Null. Damit reduziert sich der resultierende, niederfrequente Körperschallpegel derartiger Motoren sehr erheblich. Die akustische Signatur, insbesondere von U-Booten, aber auch von Überwassermarineschiffen, kann so der akustischen Signatur von nicht-stromrichtergespeisten elektrischen Hauptantriebsmaschinen angenähert werden.

In Ausführung der Erfindung wird jedem einzelnen Strang des Stromrichters ein Regler zur Unterdrückung des Gleichstromanteils zugeordnet. Als Regler bietet sich ein Simatic-S7-Regler an. Die Regler der einzelnen Strange sind miteinander verknüpft und bilden ein Regelsystem, in dem die gegenseitige Beeinflussung der einzelnen Wicklungsströme aufeinander berücksichtigt werden. Der Gleichstromanteil wird soweit wie möglich unterdrückt. Als Grundlage der Regelung dienen Istwert-Erfassungen mit Hilfe bekannter Sensoren bzw. Berechnungsmethoden. Weiterhin werden Beschleunigungsaufnehmer, Winkel-Lagegeber etc als Sensoren eingesetzt.

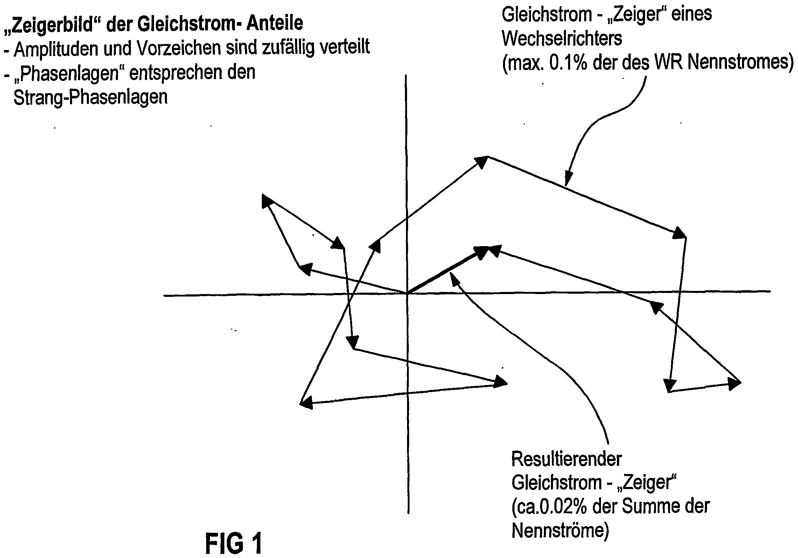

Das Prinzip der Regelung ist aus FIG 1 zu ersehen. FIG 1 zeigt ein Vektordiagramm mit dem verbleibenden, sehr kleinen resultierenden Gleichstromvektor.

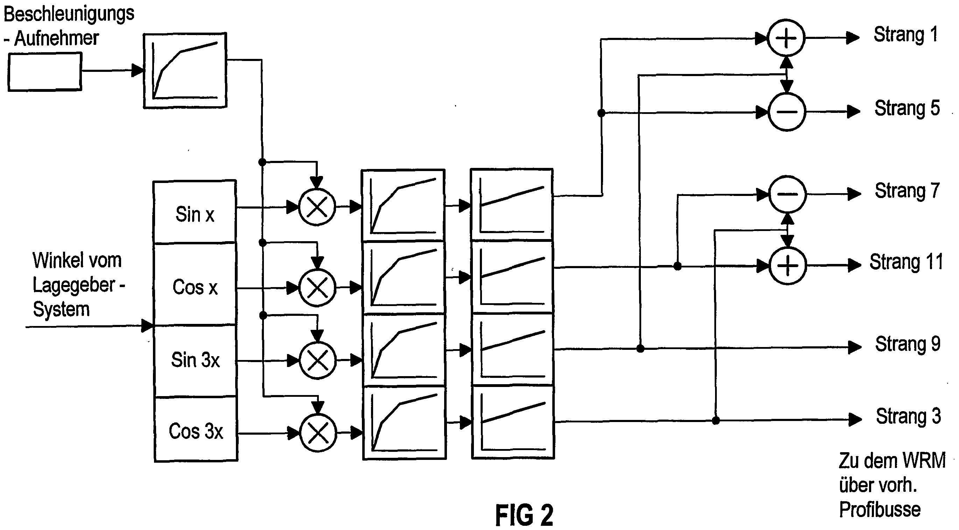

FIG 2 zeigt ein in schematischer Form gezeigtes Bild der Beeinflussung der einzelnen Stränge mit der Anordnung von ausgewählten Sensoren.

Das Regelungssystem wird softwaremäßig realisiert, eine hardwaremäßige Realisierung ist aber auch möglich. Vorteilhaft werden die entstehenden Signale über vorhandene Bussysteme übertragen.

## Patentansprüche

1. Verfahren zur Regelung eines mehrphasigen elektrischen Schiffsantriebsmotors, der über einen Stromrichter mit elektrischer Energie versorgt wird, wobei der Schiffsantriebsmotor als permanenterregter Motor mit mindestens drei Wicklungen ausgebildet ist, **dadurch gekennzeichnet, dass** die in den Wicklungen fließenden Phasenströme über den Stromrichter zur Minimierung der von dem elektrischen Schiffsantriebsmotor ausgehenden Körperschallgeräusche geregelt werden, wobei die Minimierung durch eine Regelung der in den Wicklungen auftretenden Gleichstromanteile auf den Summenstrom Null erfolgt.

2. Verfahren nach Anspruch 1, **dadurch gekennzeichnet, dass** geräuscherzeugende Stromanteile derart geregelt werden, dass sich ihre geräuscherzeugenden Wirkung soweit wie möglich gegenseitig aufhebt.

3. Verfahren nach Anspruch 1 oder 2, **dadurch gekennzeichnet, dass** die Regelung die niederfrequenten Anteile der erzeugten Körperschallgeräusche klein hält.

4. Verfahren nach Anspruch 1, 2 oder 3, **dadurch gekennzeichnet, dass** die Regelung als Softwareregelung ausgebildet ist.

5. Verfahren nach einem oder mehreren der vorhergehenden Ansprüche, **dadurch gekennzeichnet, dass** die Regelung über ein Regelsystem erfolgt, das als SPS-System ausgebildet ist.

6. Verfahren nach Anspruch 5, **dadurch gekennzeichnet, dass** die Geräuschminimierung durch Parametrierung des SPS-Systems erfolgt.

7. Verfahren nach Anspruch 6, **dadurch gekennzeichnet, dass** die Parametrierung in Bezug auf die Stromkurvenformen, die Frequenzsteuerung und die Pulsbildung erfolgt.

8. Verfahren nach einem oder mehreren der vorhergehenden Ansprüche, **dadurch gekennzeichnet, dass** es in Unterwasserfahrzeugen verwendet wird.

9. Verfahren nach einem oder mehreren der Ansprüche 1 bis 7, **dadurch gekennzeichnet, dass** es für Motore von elektrischen Ruderpropellern verwendet wird.

## Claims

1. Method for controlling a polyphase electrical ship propulsion motor which is supplied with electrical power via a converter, with the ship propulsion motor being in the form of a motor with permanent magnet excitation having at least three windings, **characterized in that** the phase currents flowing in the windings are controlled via the converter in order to minimize the structure-borne noise originating from the electrical ship propulsion motor, the noise being minimized by controlling the DC components which occur in the windings to a total current of zero.

2. Method according to Claim 1, **characterized in that** noise-producing current components are controlled such that their noise-producing effects cancel one another out as far as possible.

3. Method according to Claim 1 or 2, **characterized in that** the control system keeps the low-frequency components of the structure-borne noise that is produced small.

4. Method according to Claim 1, 2 or 3, **characterized in that** the control system is in the form of a software control system.

5. Method according to one or more of the preceding claims, **characterized in that** a control system is used which is in the form of a PLC system.

6. Method according to Claim 5, **characterized in that** the noise is minimized by configuration of the PLC system.

7. Method according to Claim 6, **characterized in that** the configuration process is carried out with respect to the current curve forms, the frequency control and the pulse formation.

8. Method according to one or more of the preceding claims, **characterized in that** the method is used in underwater vessels.

9. Method according to one or more of Claims 1 to 7, **characterized in that** the method is used for motors for electric steering propellers.

## Revendications

1. Procédé de régulation d'un moteur électrique polyphasé d'entraînement de bateau, qui est alimenté en énergie électrique par un convertisseur, le moteur d'entraînement de bateau étant constitué sous la forme d'un moteur à excitation permanente ayant au moins trois enroulements, **caractérisé en ce que** l'on régule les courants de phase passant dans les enroulements par le convertisseur pour minimiser les bruits de structure provenant du moteur électrique d'entraînement du bateau, la minimisation s'effectuant par une régulation des composantes de courant continu apparaissant dans les enroulements jusqu'à un courant de somme nul.

2. Procédé suivant la revendication 1, **caractérisé en ce que** l'on régule des composantes de courant produisant du bruit de manière à ce que leurs effets de production du bruit se suppriment mutuellement autant que possible.

3. Procédé suivant la revendication 1 ou 2, **caractérisé en ce que** l'on maintient à une valeur petite les composantes de basse fréquence des bruits de structure produits.

4. Procédé suivant la revendication 1, 2 ou 3, **caractérisé en ce que** la régulation est constituée sous la forme d'une régulation par logiciel.

5. Procédé suivant l'une ou plusieurs des revendications précédentes, **caractérisé en ce que** la régulation s'effectue par un système de régulation, qui est constitué en un système SPS.

6. Procédé suivant la revendication 5, **caractérisé en ce que** la minimisation du bruit s'effectue par paramétrisation au système SPS.

7. Procédé suivant la revendication 6, **caractérisé en ce que** la paramétrisation s'effectue en relation aux formes de courbe du courant, à la commande de fréquence et à la formation d'impulsions.

8. Procédé suivant l'une ou plusieurs des revendications précédentes, **caractérisé en ce qu'**on l'utilise dans des sous-marins.

9. Procédé suivant l'une ou plusieurs des revendications 1 à 7, **caractérisé en ce qu'**on l'utilise pour des moteurs électriques d'hélice de gouvernail.
